(19) Europäisches Patentamt
European Patent Office
Office européen des brevets

(11) **EP 1 633 093 B1**

(12) **EUROPEAN PATENT SPECIFICATION**

(45) Date of publication and mention
of the grant of the patent:
**10.08.2011 Bulletin 2011/32**

(51) Int Cl.:
*H04L 12/56* [(2006.01)]     *H04L 29/08* [(2006.01)]

(21) Application number: **05300519.5**

(22) Date of filing: **28.06.2005**

(54) **Method for improving quality-of-service management in networks**

Verfahren zur Verbesserung des Dienstgüte-Managements in Peer-to-Peer-Netzen

Procédé et appareil pour ameliorer la gestion de qualité de service dans des réseaux peer-to-peer

(84) Designated Contracting States:
**DE FR GB**

(30) Priority: **02.09.2004 EP 04090339**

(43) Date of publication of application:
**08.03.2006 Bulletin 2006/10**

(73) Proprietor: **Thomson Licensing
92130 Issy-les-Moulineaux (FR)**

(72) Inventors:
- **Klausberger, Wolfgang**
  **30519 Hannover (DE)**
- **Blawat, Meinolf**
  **30659 Hannover (DE)**
- **Kubsch, Stefan**
  **31559 Hohnhorst (DE)**
- **Li, Hui**
  **30419 Hannover (DE)**
- **Hepper, Dietmar**
  **30419 Hannover (DE)**

(74) Representative: **Rittner, Karsten
Deutsche Thomson OHG
European Patent Operations
Karl-Wiechert-Allee 74
30625 Hannover (DE)**

(56) References cited:
**EP-A- 1 229 442**

- **KING M ET AL: "Transforming the reliability, security and scalability of it communications through the pervasive deployment of serverless software infrastructure" SECOND INT. CONF. ON PEER-TO-PEER COMPUTING, 5 September 2002 (2002-09-05), pages 5-12, XP010612177**
- **TAO ZHAO ET AL: "Enforcing resource sharing agreements among distributed server clusters" PARALLEL AND DISTRIBUTED PROCESSING SYMPOSIUM., PROCEEDINGS INTERNATIONAL, IPDPS 2002, ABSTRACTS AND CD-ROM FT. LAUDERDALE, FL, USA 15-19 APRIL 2002, LOS ALAMITOS, CA, USA,IEEE COMPUT. SOC, US, 15 April 2002 (2002-04-15), pages 214-223, XP010591037 ISBN: 0-7695-1573-8**
- **KING M ED - GRAHAM R L ET AL: "Breaking the server and data communications barrier with serverless guaranteed quality of service (GQoS) compliant communications" PEER-TO-PEER COMPUTING, 2001. PROCEEDINGS. FIRST INTERNATIONAL CONFERENCE ON LINKOPING, SWEDEN 27-29 AUG. 2001, LOS ALAMITOS, CA, USA,IEEE COMPUT. SOC, US, 27 August 2001 (2001-08-27), pages 36-44, XP010583972 ISBN: 0-7695-1503-7**

**Description**

<u>Field of the invention</u>

This invention relates to a method for controlling data traffic within a group of cooperating network nodes. In particular, the invention relates to a method for improving quality-of-service management in networks.

<u>Background</u>

Networks of connected devices for exchanging data and sharing hardware resources can be built up not only for computers but also for consumer electronic devices. The separate devices are called nodes of the network. Networks can be classified as being based on either client-server or peer-to-peer (P2P) architectures, where a node is also referred to as a peer. While in client-server architectures each node is defined to be either client or server, peers in P2P networks include both functionalities, server and client, and can provide services or resources to other nodes in the network or use services or resources provided by other nodes in the network.

P2P networks are usually not restricted to any special applications or underlying network topologies, but can be understood as a set of nodes, or peers, which rely on certain sets of specific protocols. It is characteristic for a P2P network that the peers communicate directly with other peers, so that no central network organization is required. P2P networks may support that peers can be connected to the network or disconnected from the network at any time.

The mentioned P2P protocols are required for basic network organization, such as e.g. discovery of other connected peers, offering of services or resources to other peers (advertising), or understanding other peers' advertising messages. Also, there are protocols that enable a group of peers to cooperate, and thus form a peer-group. A method for building a home network as a peer-group based on such P2P techniques is described e.g. in the European patent application EP02027122. General P2P networks and mechanisms are in a detailed manner published e.g. in WO 02/057917.

Quality of Service (QoS) is a networking term specifying the characteristics and quality of a connection between two distinct points in a network, e.g. a guaranteed throughput level being the amount of data transferred from one place to another in a specified amount of time, a minimum bandwidth or a maximum delay of transmitted data. Usually various QoS classes are defined and network connections are categorized by the QoS class they may provide. Different network infrastructures utilize different strategies and protocols. E.g. the IEEE 1394 protocol is developed for audio-visual (AV) data handling with guaranteed throughput, while e.g. the Ethernet network uses a simple "best effort" approach. To achieve QoS functionality in Ethernet networks there exist models like assigning priorities or allocating network resources for a data transfer.

However, the known QoS strategies require special knowledge of the currently used physical network. Currently known QoS management approaches for home networks require considering QoS at all layers, also at the network layer.

<u>Summary of the Invention</u>

It is desirable that the requirement for P2P systems to be independent of the underlying physical network topology is also valid for the QoS within peer-groups, even when the underlying network does not guarantee a specific QoS. A QoS management system according to the present invention may work on top of the underlying network, and on account of this is independent of the underlying network. It can therefore be regarded as a logical QoS management system. Thus, applying the inventive method on any physical network will improve the QoS functionality.

According to the invention, a special group service for QoS management within peer-groups is installed. This group service determines and assigns a "budget" per specific time unit for each peer. Such time unit may be in the range of milliseconds or few seconds, or even more. While a peer uses bandwidth, i.e. while it sends or receives data, its budget decreases. When a peer has exhausted its budget, it has to lower its priority for transferring or receiving data until its budget is refilled, or until other peers' budgets are lower. If a peer does not keep the conditions, the QoS service tries to manage the load with the concerned peers. If an agreement between the peers is not achievable, e.g. all peers have the same priority and budget, the QoS service may inform the user which peer overloads the network. Then the user has the choice how to proceed, e.g. change priorities for certain peers.

In particular, the inventive method for controlling data traffic within a group of cooperating network nodes, with at least one service function being available as a "group service" for the nodes of the group, includes the following steps:

First said service function, named e.g. "QoS service", assigns individual numerical values as "budget" to the individual nodes of the group.

Then the individual budgets or numerical values are transmitted to the respective network nodes, which store their numerical budget value.

In the next step, a network node that intends to send or receive data checks whether its stored numerical value is above a threshold, and upon determining that this is the case it determines or calculates from the numerical value a data rate value, wherein the determined data rate value depends on the numerical value, i.e. the data rate value is the higher the higher the numerical value is. This means that a node's remaining budget value is a measure for the bandwidth the node may allocate, or for the amount of data it may send or receive before the budget is refilled; e.g. the node may allocate more bandwidth as long as its budget value is high, and lower its data rate while its budget decreases, so that it can send and/or receive continuously. Another possibility for the node is to just allocate the bandwidth it needs as long as the budget is positive, regardless of the actual budget value. In this case it may have to interrupt its transfer when its budget is empty, or request an exception from the service function.

As the next step, the network node decreases the stored budget values while sending or receiving data at the determined data rate, in order to keep track of its budget. Therefore it stores the decreased numerical value, for repeating the steps of determining from the current value a data rate, sending/receiving data at the determined rate and decreasing the budget correspondingly, until the budget is refilled. The refilling may preferably be done in regular time intervals, or e.g. when the total budget of all nodes of the group is below a threshold.

The inventive method can be extended by the following steps: When the network node has determined a data rate value from its current budget value, it may send a message to the QoS service function containing this data rate value and further containing a request for data transmission or reception, or bandwidth allocation in general. Then the QoS service function sends a message with an agreeing or disagreeing statement back to the node. This message may also contain an admissible data rate for the node, wherein the network node may only transmit or receive data upon an agreeing statement from the first service function. This means that the Qos service function may reduce or increase, and thus control, the bandwidth that a node uses.

For determining budget values it may evaluate the current traffic situation on the network as follows:

First, the QoS service function monitors during a specified time the data rate that the nodes of the group use, and accumulates the monitored data rates in order to find the total workload on the network. Then it determines from the accumulated data rates a value representing a group budget, and determines from the group budget individual numerical values for the network nodes.

An apparatus being a network node or component thereof that utilizes the inventive method is disclosed in claim 10.

Such apparatus may be a network node being capable of cooperating with other network nodes as a group of nodes, wherein at least one service function is available for said nodes within the group, including

interface means for receiving from a first service function an individual numerical value;

storage means for storing the received individual numerical value;

means for determining that the stored numerical value is above a threshold;

calculation means, for determining from the numerical value a data rate value, wherein the determined data rate value is the higher the higher the numerical value is;

control means for modifying the data rate of said interface means to meet the determined data rate;

calculation means for decreasing the stored numerical value; and

storage means for storing the decreased numerical value.

Advantageous embodiments of the invention are disclosed in the dependent claims, the following description and the figures.

Brief description of the drawings

Exemplary embodiments of the invention are described with reference to the accompanying drawings, which show in

Fig.1 the structure of a virtual network on top of an Ethernet based physical network;

Fig.2 priorities or budgets assigned to peers; and

Fig.3 a network node containing a budget dependent data rate control.

Detailed description of the invention

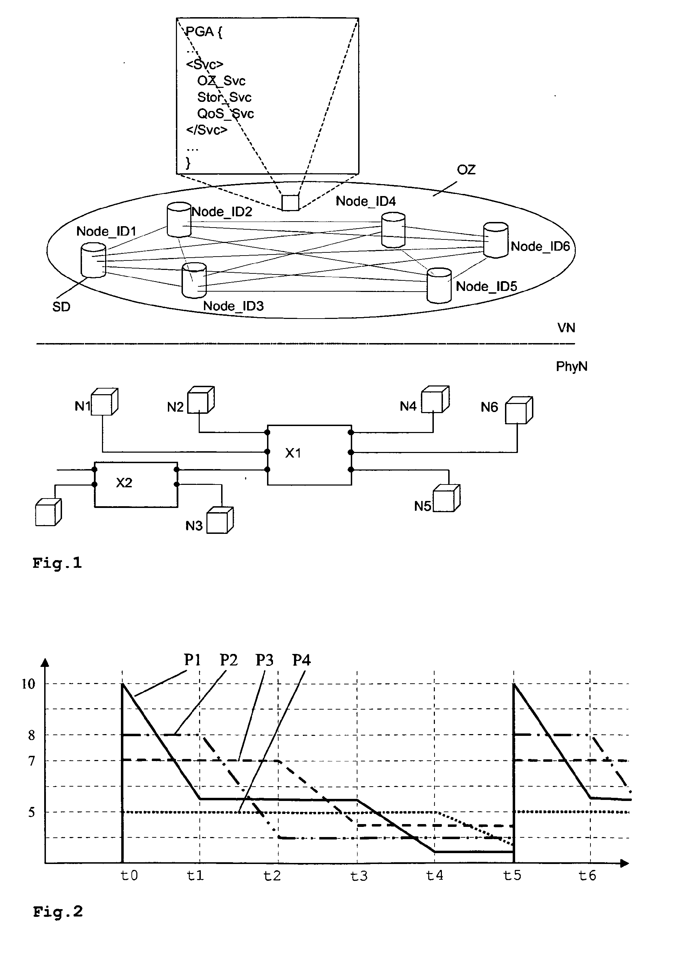

Fig.1 depicts a logical or virtual network VN being a kind of network overlay on top of a physical network Phy_ N, e.g. a switched Ethernet network. The physical nodes N1,...,N6 have on a logical level individual identifiers Node_ ID1,..., Node_ID6 and form a peer-group, which may in particular be e.g. an "Owner Zone" OZ as described in the European patent application EP1427141. This means that its member peers have a common group identifier and may communicate with each other, but not with other peers. Further, they may use e.g. the JXTA protocol set described in WO02/057917. The invention may also be applied to other network types where common services are used. The following description refers to OwnerZones as well as to peer-groups in general.

Peer-groups use peer-group advertisement (PGA) messages to distribute information about the services Svc that are available within the peer-group. These are exemplarily an OwnerZone service OZ_Svc for administrative tasks relating generally to the peer-group as such, a storage service Stor_Svc for managing distributed storage within the peer-group, and a Quality-of-Service service QoS_Svc according to the invention. The PGA messages containing the list of services are published within the peer-group so that all member peers get knowledge about available services, and how to access them.

The inventive method or service for QoS management within the OZ, or more generally within a peer-group, determines, assigns and supervises a budget per defined time unit for each peer of the OZ or peer-group.

First, the QoS service QoS_Svc determines the budget of the peer-group. This can be achieved by monitoring and metering the data transport within the peer-group. E.g. round-trip times (RTTs) for special sequences of test packets are measured, preferably when the OZ is idle and traffic is low. RTTs can however also be measured in parallel to running transfers. For RTT measurement, dedicated test packets are sent to a receiver, which sends the packets back, and the reply time is measured. The measured reply time serves as a basis for estimating an "expected" period. If the reply does not come within the expected period, the packet is assumed to be lost and the data is retransmitted.

E.g. the following criteria can be used for determining the maximum transfer budget within the OwnerZone:

1. Delay of data packets. For a certain guaranteed QoS level the delay of data packets may not exceed a predefined threshold.
2. Loss of data packets. For a certain guaranteed QoS level the loss rate of data packets may not exceed a predefined threshold.

For RTT measurements, the QoS service increases transfer rates between peers until one of the criteria is reached, so that the maximum budget for all connections between the peers in the peer-group can be estimated. The QoS service comprises a strategy to distribute RTT measurements to several peers in parallel to evaluate a realistic maximum budget that will neither overload nor "underload" the network, i.e. prevent congested and idle states.

As an example for the estimation of the maximum peer-group budget, a peer-group may consist of 100 peers, and the packet delay threshold will be reached at 90 Mb/s, e.g. by 3 connections at 30 Mb/s. Then the budget per peer is

$$90\text{Mb/s} \; / \; 100 \; \text{peers} \; * \; \text{TU} = 0.9\text{Mb/s} \; * \; \text{TU}$$

where TU is a time unit, e.g. 1 hour.

Together with this estimation, the value for the maximum transfer rate for one P2P connection and for a simultaneous data transfer for several P2P connections can be estimated and maintained in a list. The list is part of the QoS service. The QoS service assigns a part of the budget to each peer, so that the peers receive their budget value from the QoS service. This may be e.g. the current value on a regular basis, an initial value and a drop rate, or similar. When a peer initiates a transfer, it may send a message with the transfer characteristics to the QoS service. In one embodiment of the invention, a peer sends such message for each transfer. Thus, the QoS service is able to approve, control and manage data transfers within the peer-group or OZ, wherein generally each peer is responsible to keep it's own budget. The QoS service may control priorities of different network nodes, and thus smooth the traffic situation by delaying or preventing packets.

In the course of time, the QoS service may refine the strategy to determine the maximum budget of the peer-group and the maximum transfer rate. This can be done e.g. by determining the maximum budget by different combinations of peer-to-peer connections, maintaining a history list of RTT measurements or finding bottlenecks of the underlying network.

When a peer tries to exceed its budget, i.e. transmit or receive data although its budget is exhausted or empty, it may request additional budget from the QoS service, and the QoS service having an overview over current data traffic may agree e.g. if the network load is currently low. When the QoS service observes a traffic overload in the network, it tries to manage the load with the concerned peers, i.e. the sending, receiving and waiting peers. If a load agreement between the peers is not achievable, the QoS service may inform the user about which peer overloads the network. The user will then have the choice how to proceed, or can set priorities: For instance, stop one of the transfers and resume it later, or switch a particular transfer to a lower transfer rate, e.g. for media rendering, playback in SDTV instead of HDTV or the like. In case of a normal playback the media rendering may be performed automatically in order to save budget.

With these measurements, the QoS service can get some knowledge about the topology of the network. If the QoS service discovers peers that have a restricted bandwidth connection, it will be more efficient for the whole OZ to assign a lower budget to these peers by lowering their weight or priority. The QoS service may assign a priority to a peer. So peers with faster connections have a higher budget available.

The QoS service determines the budget of the peer-group and assigns a part of the budget as initial value for each peer. More important peers with a higher priority may get a higher budget. Moreover, the user may influence how much budget a peer gets, e.g. by assigning a priority to a peer or a connection, which can then be used by the QoS service to determine the budget. The priority of a peer decreases within time while it uses bandwidth, i.e. the more of its budget a peer has spent per defined time unit, the less is its priority compared to other peers. The budget of the peer may be refilled after the defined time unit. The defined time unit may elapse for all peers simultaneously, or individually for each peer or groups of peers. Alternatively, the budgets may be refilled when a certain amount of data have been transferred within the peer-group, i.e. the sum of the node budgets within the group is below a threshold value.

Fig.2 shows in a simplified manner how the budget of different peers may be changed in time. At a time t0, the QoS service assigns to four peers P1,...,P4 individual budgets. The peers P1,...,P4 get budgets of 10, 8, 7 and 5 respectively. A budget value can also be understood as a kind of priority value. The reduction of budget during transfer can be understood as "transfer cost". In the example in Fig.2, one peer P1 starts transferring data at t0, and thus uses bandwidth in the network. While it transfers data, its budget is decreasing. After a while, at t1, a second peer P2 starts a transfer and sends a message to the QoS service to request bandwidth, the QoS service recalculates or evaluates the current budgets and detects in this example a network overload, and that the second peer P2 has a higher budget than the first peer P1. Thus, the first peer P1 must in this example reduce its transfer rate at t1, so that its budget decreases slower or remains constant, and the second peer P2 may transfer data. The QoS service may control this through sending messages. After another while, at t2, a third peer P3 has data to transmit and has the highest budget and may therefore transfer data. Later, at t3, the first peer P1 may continue transferring data because it has at that moment the highest remaining budget, and at t4 a fourth peer P4 may transfer data. A defined time after the previous budget assignment, at t5, all peers get new budgets defined, and the cycle may be repeated.

Though the described embodiment shown in Fig.2 shows the main effect of the invention in principle, it is however simplified in the following manners:

While in Fig.2 only one peer at a particular time occupies bandwidth, it will usually be the case that two or more peers share the available bandwidth, and the QoS service determines upon priority or budget which share a peer gets. In case of a non-overloaded network, i.e. all priorities can be served, the order of serving requests may depend on a node's budget so that the budget can be seen as the only priority value. When the QoS-service determines an overload of the network and no self-organised solution for bandwidth reduction is achievable, the QoS-service decides upon a peer's budget how much bandwidth it gets. In particular, if two peers have the same priority then the QoS service will decide, depending on the remaining budgets of the peers, which share of the available bandwidth each peer gets.

While in Fig.2 only the budget of a transmitting peer is reduced, it is also possible to reduce the budget of the receiving peer, or both may share the "transfer costs". Further it is possible that the peer that has caused or initiated a transfer is not involved in the transfer itself. In this case it is also possible to charge the budget of the causing peer.

While in Fig.2 all peers have a fixed value to which they get their respective budgets refilled, it is possible to recalculate budgets at any time, and at the next refilling cycle assigning modified budgets to the peers.

Further, while in Fig.2 all peers get their budgets assigned simultaneously, the QoS service may assign budgets at individual times to different peers.

While in Fig.2 the budget of a peer drops linearly during a time increment, it may also drop in a non-linear manner according to the data rate it momentarily uses.

While in Fig.2 the remaining budget of a peer is ignored for refilling, it is alternatively possible to accumulate the assigned new budget value and the remaining budget, so that also peers with low budgets can gather high priority. Time increments may be defined that may be very short, e.g. few milliseconds or microseconds or the typical transmittal time of a packet in the network, and the number of increments between re-assigning budgets may be very high, e.g. in the range of tens of thousands or even more. Moreover, the time between re-assigning budgets to peers need not be constant. Instead, the QoS service may observe the current budget development, accumulate all the budgets that the peers have available and assign new budgets only when the accumulated sum is below a threshold.

Further, in one embodiment of the invention a peer must explicitly request bandwidth before it may transfer data, and in the request it points out a required data rate and/or amount of data. Then the QoS service will, according to the current network traffic situation, assign a certain priority for the particular transfer. When a peer tries to transfer a huge amount of data in a short time, i.e. with a very high data rate, this transfer could block any other transfer. To prevent this, the maximum transfer rate for a single peer-to-peer connection may be restricted by an upper limit, which may be e.g. the transfer rate for a high definition video transfer. When a peer wants to allocate a higher data rate, the priority for that transfer may be lowered.

In one embodiment of the invention, the budget of a peer remains constant during the transfer, and is charged with the transfer costs after the transfer is finished, so that running transfers are not interrupted even if the budget of the node is empty.

When the budget of a peer is exhausted, the corresponding peer has to reduce its activity for the benefit of other peers with a higher budget. Regulatory measures may be foreseen for the case that a peer does not keep the conditions, e.g. other peers may deny the data transfer to and from that peer by delaying acknowledgement messages or the like. Running transfers may be allowed to finish, or may be terminated by a time-out. This can keep the network running also when a peer is not cooperative as a consequence of an error. As a penalty, the QoS service can assign a lower budget to that peer. When a peer continues to break the conditions, the QoS service can request the user to disconnect the peer from the network, in order to maintain an efficiently working peer-group.

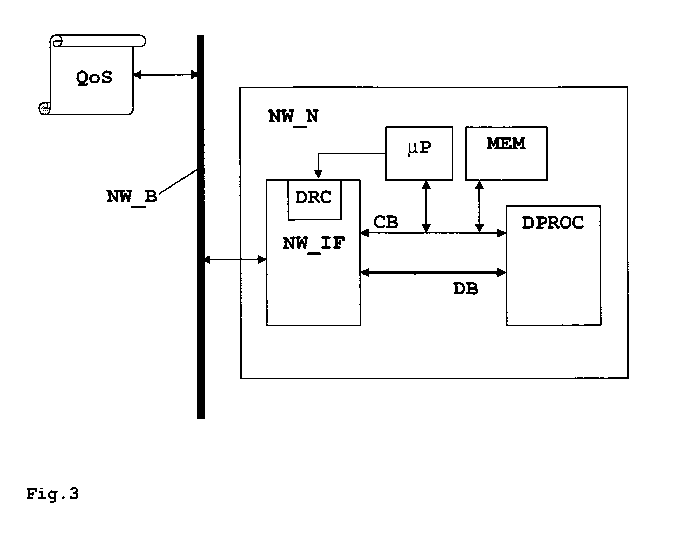

A device according to the invention is shown in Fig.3. It is a network node NW_N or component thereof which may be connected e.g. via a network bus NW_B to a service function QoS that performs quality-of-service management. The network node NW_N contains a network interface NW_IF, a processing unit $\mu$P, a memory unit MEM and a data processing unit DPROC, which may all communicate with each other via an internal communication bus CB. Further, the network interface NW_IF may send or receive data to or from the data processing unit DPROC via an internal data bus DB, which is usually a high-capacity bus. To implement the present invention, the network interface unit NW_IF contains a data rate controller DRC that is connected to the processing unit $\mu$P.

The network interface NW_IF receives from the service function QoS a message that contains a budget value for the network node NW_N. The processing unit $\mu$P evaluates the message, extracts the budget value and stores it in a memory MEM, which may also be within the processing unit to that it is easily accessible. Then the processing unit calculates from the budget value a data rate value, which it may transmit to the data rate control unit DRC of the network interface NW_IF. It may however also evaluate the value itself, and in a simple embodiment control the data rate of the network interface NW_IF by enabling or disabling it depending on the remaining budget, so that the data rate control unit DRC is an enable switch of the network interface. In a more sophisticated embodiment, the data rate control unit DRC receives a target data rate value from the processing unit and adjusts the actual data rate of the network interface to meet the target data rate.

The QoS service determines the priority of a transfer, e.g. depending on the node and the data type; a node provides data type information when it requests bandwidth. Therefore not necessarily the node with the highest budget must be preferred. The budget is mainly a means for the self-organization of the peer. When two peers with same priority transfer data with the same priority, the QoS service may enforce or restrain each of them according to their budgets e.g. assign more or less bandwidth.

The peer-group may be a dynamic system where peers may join and leave arbitrarily, like e.g. in an OwnerZone. The QoS service may keep a part of the budget as a reserve for new joining peers, or it may reassign the budget for each peer when a new peer joins the peer-group. Keeping a reserve is advantageous for peer-groups where peers enter and leave very often, e.g. when peers are mobile devices.

Advantageously, the logical "quality of service" management system according to the invention is independent of the underlying physical network. When the invention is utilized e.g. in a peer-group being an OwnerZone, the peer-group may adaptively control its data transfer performance by processing the described metering and monitoring, and may instruct the peers concerning their cooperative behaviour by controlling their budgets.

It is particularly advantageous to use the invention for multimedia home networks that include electronic storage devices and are based on peer-to-peer technology. The peer-group or OwnerZone may implement e.g. a distributed storage system. The invention can however also be used in other types of peer-groups.

**Claims**

1. A method for controlling data traffic within a group of cooperating network nodes (N1,...,N6), wherein at least one service function (QoS_Svc) is available for said nodes within the group, including the steps of

   - the service function (QoS_Svc) receiving a first message from a network node of said cooperating network nodes (N1,...,N6) , the first message specifying a required data rate and a request for data transmission or reception;
   - upon receiving the first message, the service function evaluating current budgets of individual nodes of the group, and calculating individual numerical values that represent new budgets for individual nodes of the group;
   - the service function (QoS_Svc) assigning the individual numerical values to individual nodes (N1.....N6) of the group, wherein a numerical value assigned to a node is a measure for the bandwidth that the node may allocate during a specified time or a measure for an amount of data that the node may send or receive during a specified time;
   - transmitting to the network nodes (N1,...,N6) their respective individual numerical values;
   - storing in the network nodes (N1,...,N6) their assigned individual numerical values;

- a network node (N1,...,N6) determining that its stored numerical value is positive, and upon said determining, performing the steps of
- determining from the numerical value a data rate;
- the network node (N1,...,N6) sending or receiving data at the determined data rate;
- the network node (N1,...,N6) decreasing the stored numerical value and storing the decreased numerical value; and
- repeating the steps of determining that the numerical value is positive, determining from the stored numerical value a data rate, sending or receiving data at the determined data rate and decreasing the stored numerical value correspondingly, until the stored numerical value is not positive or the sending or receiving of data is finished.

2. Method according to claim 1, wherein the step of transmitting numerical values to the network nodes comprises the service function sending back a second message to the node from which the message was received, the second message containing an agreeing or disagreeing statement, wherein the network node may only transmit or receive data upon an agreeing statement from the service function.

3. Method according to claim 1 or 2, further including the steps of

- monitoring by the service function (QoS_Svc) during a specified monitoring time the data rate that the nodes of the group use;
- accumulating said monitored data rates;
- determining from the accumulated data rates a value representing a group budget, and determining from the group budget individual numerical values for the network nodes.

4. Method according to claim 1 or 2, further including the steps of

- measuring round-trip-times for network connections between said nodes, wherein a round-trip-time is the time between sending a packet from a first to a second node and receiving an answer from the second node at the first node, or detecting that no answer was received after a specified time; and
- determining from the measured round-trip-times a value representing a group budget, and determining from the group budget individual numerical values for the network nodes.

5. Method according to claim 3 or 4, wherein a part of the budget is not assigned to the nodes, but reserved for new nodes joining the group.

6. Method according to any of the claims 1-5, wherein said service function (QoS_Svc) determines a budget for the group and/or re-assigns individual numerical values to the nodes in defined regular time intervals.

7. Method according to any of the claims 1-6, wherein the network nodes (N1,...,N6) add their respectively assigned individual numerical value to their individual remaining numerical value from the previous assignment, and store the sum.

8. Method according to any of the claims 1-7, wherein the service function (QoS) accumulates the data rates of the nodes and determines a budget for the group and/or assigns the individual numerical values to the nodes when the accumulated data rates are above a threshold.

9. Method according to any of the claims 1-8, wherein the network nodes are peers in a peer-to-peer network.

10. A network node (NW_N) being capable of cooperating with other network nodes as a group of nodes, wherein at least one service function (QoS) is available for said nodes within the group, including

- interface means (NW_IF) for sending a transmission or reception data rate request message to the service function, and for receiving from the service function (QoS) an individual numerical value;
- means (MEM) for storing the received individual numerical value;
- means ($\mu$P) for determining that the stored numerical value is positive;
- means ($\mu$P) for determining from the numerical value a data rate if the numerical value is positive, wherein the numerical value is a measure for the bandwidth that the node may allocate during a specified time or a measure for an amount of data that the node may send or receive during a specified time;

- means (DRC) for modifying the data rate of said interface means (NW_IF) to meet the determined data rate;
- means ($\mu$P) for decreasing the stored numerical value;
- means (MEM) for storing the decreased numerical value; and
- means for retriggering the means ($\mu$P) for determining from the stored decreased numerical value a data rate if the stored decreased numerical value is positive, until the stored numerical value is not positive or the sending or receiving of data is finished.

**11.** A network node according to claim 10, further comprising means for adding the received numerical value to the stored, decreased numerical value.


**Patentansprüche**

**1.** Verfahren zum Steuern von Datenverkehr innerhalb einer Gruppe zusammenwirkender Netzknoten (N1, ..., N6), wobei für die Knoten innerhalb der Gruppe mindestens eine Dienstfunktion (QoS_Svc) verfügbar ist, wobei das Verfahren die folgenden Schritte enthält:

- die Dienstfunktion (QoS_Svc) empfängt von einem Netzknoten der zusammenwirkenden Netzknoten (N1, ..., N6) eine erste Nachricht, wobei die erste Nachricht eine angeforderte Datenrate und eine Anforderung für die Datensendung oder für den Datenempfang angibt;
- beim Empfang der ersten Nachricht bewertet die Dienstfunktion gegenwärtige Budgets einzelner Knoten der Gruppe und berechnet einzelne Zahlenwerte, die neue Budgets für einzelne Knoten der Gruppe repräsentieren;
- die Dienstfunktion (QoS_Svc) weist die einzelnen Zahlenwerte einzelnen Knoten (N1, ..., N6) der Gruppe zu, wobei ein einem Knoten zugewiesener Zahlenwert ein Maß für die Bandbreite ist, die der Knoten während einer angegebenen Zeit zuordnen kann, oder ein Maß für eine Menge an Daten ist, die der Knoten während einer angegebenen Zeit senden oder empfangen kann;
- Senden ihrer jeweiligen einzelnen Zahlenwerte an die Netzknoten (N1, ..., N6);
- Speichern ihrer zugewiesenen einzelnen Zahlenwerte in den Netzknoten (N1, ..., N6);
- ein Netzknoten (N1, ..., N6) bestimmt, dass sein gespeicherter Zahlenwert positiv ist, und führt nach der Bestimmung die folgenden Schritte aus:
- Bestimmen einer Datenrate aus dem Zahlenwert;
- der Netzknoten (N1, ..., N6) sendet oder empfängt Daten mit der bestimmten Datenrate;
- der Netzknoten (N1, ..., N6) verringert den gespeicherten Zahlenwert und speichert den verringerten Zahlenwert; und
- Wiederholen der Schritte des Bestimmens, dass der Zahlenwert positiv ist, des Bestimmens einer Datenrate aus dem gespeicherten Zahlenwert, des Sendens oder Empfangens von Daten mit der bestimmten Datenrate und des entsprechenden Verringerns des gespeicherten Zahlenwerts, bis der gespeicherte Zahlenwert nicht positiv ist oder das Senden oder das Empfangen der Daten abgeschlossen ist.

**2.** Verfahren nach Anspruch 1, bei dem der Schritt des Sendens von Zahlenwerten an die Netzknoten umfasst:

die Dienstfunktion sendet an den Knoten, von dem die Nachricht empfangen wurde, eine zweite Nachricht zurück, wobei die zweite Nachricht eine Übereinstimmungs- oder Nichtübereinstimmungsaussage enthält, wobei der Netzknoten nur bei einer Übereinstimmungsaussage von der Dienstfunktion Daten senden oder empfangen kann.

**3.** Verfahren nach Anspruch 1 oder 2, das ferner die folgenden Schritte enthält:

- Überwachen der Datenrate, die die Knoten der Gruppe verwenden, während einer angegebenen Überwachungszeit durch die Dienstfunktion (QoS_Svc);
- Ansammeln der überwachten Datenraten;
- Bestimmen eines Werts, der ein Gruppenbudget repräsentiert, aus den angesammelten Datenraten, und Bestimmen einzelner Zahlenwerte für die Netzknoten aus dem Gruppenbudget.

**4.** Verfahren nach Anspruch 1 oder 2, das ferner die folgenden Schritte enthält:

- Messen der Umlaufzeiten (round-trip-times) für Netzverbindungen zwischen den Knoten, wobei eine Umlaufzeit die Zeit zwischen dem Senden eines Pakets von einem ersten zu einem zweiten Knoten und dem Empfangen einer Antwort von dem zweiten Knoten bei dem ersten Knoten ist, oder Erfassen, dass nach einer angegebenen Zeit keine Antwort empfangen wurde; und

- Bestimmen eines Werts, der ein Gruppenbudget repräsentiert, aus den gemessenen Umlaufzeiten und Bestimmen einzelner Zahlenwerte für die Netzknoten aus dem Gruppenbudget.

**5.** Verfahren nach Anspruch 3 oder 4, bei dem ein Teil des Budgets den Knoten nicht zugewiesen wird, sondern für neue Knoten reserviert wird, die der Gruppe beitreten.

**6.** Verfahren nach einem der Ansprüche 1-5, bei dem die Dienstfunktion (QoS_Svc) in definierten regelmäßigen Zeitintervallen ein Budget für die Gruppe bestimmt und/oder einzelne Zahlenwerte den Knoten neu zuweist.

**7.** Verfahren nach einem der Ansprüche 1-6, bei dem die Netzknoten (N1, ..., N6) ihren jeweils zugewiesenen einzelnen Zahlenwert zu ihrem einzelnen verbleibenden Zahlenwert von der vorhergehenden Zuweisung addieren und die Summe speichern.

**8.** Verfahren nach einem der Ansprüche 1-7, bei dem die Dienstfunktion (QoS) die Datenraten der Knoten ansammelt und ein Budget für die Gruppe bestimmt und/oder die einzelnen Zahlenwerte den Knoten zuweist, wenn die angesammelten Datenraten über einem Schwellenwert liegen.

**9.** Verfahren nach einem der Ansprüche 1-8, bei dem die Netzknoten gleichberechtigte Teilnehmer (Peers) in einem Peer-to-Peer-Netz sind.

**10.** Netzknoten (NW_N), der mit anderen Netzknoten als eine Gruppe von Knoten zusammenwirken kann, wobei für die Knoten innerhalb der Gruppe mindestens eine Dienstfunktion (QoS) verfügbar ist, wobei der Netzknoten enthält:

- Schnittstellenmittel (NW_IF) zum Senden einer Sende- oder Empfangs-Datenraten-Anforderungsnachricht an die Dienstfunktion und zum Empfangen eines einzelnen Zahlenwerts von der Dienstfunktion (QoS);
- Mittel (MEM) zum Speichern des empfangenen einzelnen Zahlenwerts;
- Mittel ($\mu$P) zum Bestimmen, dass der gespeicherte Zahlenwert positiv ist;
- Mittel ($\mu$P) zum Bestimmen einer Datenrate aus dem Zahlenwert, falls der Zahlenwert positiv ist, wobei der Zahlenwert ein Maß für die Bandbreite ist, die der Knoten während einer angegebenen Zeit zuordnen kann, oder ein Maß für eine Menge an Daten ist, die der Knoten während einer angegebenen Zeit senden oder empfangen kann;
- Mittel (DRC) zum Ändern der Datenrate der Schnittstellenmittel (NW_IF) zum Erfüllen der bestimmten Datenrate;
- Mittel ($\mu$P) zum Verringern des gespeicherten ZahlenWerts;
- Mittel (MEM) zum Speichern des verringerten Zahlenwerts; und
- Mittel zum Neuauslösen der Mittel ($\mu$P) zum Bestimmten einer Datenrate aus dem gespeicherten verringerten Zahlenwert, falls der gespeicherte verringerte Zahlenwert positiv ist, bis der gespeicherte Zahlenwert nicht positiv ist oder das Senden oder Empfangen von Daten abgeschlossen ist.

**11.** Netzknoten nach Anspruch 10, der ferner Mittel zum Addieren des empfangenen Zahlenwerts zu dem gespeicherten, verringerten Zahlenwert umfasst.

## Revendications

**1.** Procédé de contrôle du trafic de données au sein d'un groupe de noeuds de réseau coopérant (N1, .... N6), où au moins une fonction de service (QoS_Svc) est disponible pour lesdits noeuds du groupe, et comprenant les étapes suivantes :

- réception, par la fonction de service (QoS_Svc), d'un premier message provenant d'un noeud de réseau desdits noeuds de réseau coopérant (N1, ..., N6), le premier message précisant un débit de données requis et une requête de transmission ou de réception de données.
- à réception du premier message, évaluation, par la fonction de service, des budgets en cours de noeuds individuels du groupe, et calcul de valeurs numériques individuelles qui représentent de nouveaux budgets pour les noeuds individuels du groupe ;
- affectation, par la fonction de service, (QoS_Svc) des valeurs numériques individuelles aux noeuds individuels (N1, ..., N6) du groupe, où une valeur numérique affectée à un noeud est une mesure de la bande passante que le noeud peut attribuer pendant une période spécifiée, ou une mesure d'une quantité de données que le noeud peut envoyer ou recevoir pendant une période spécifiée ;
- transmission aux noeuds de réseau (N1, ..., N6) de leur valeurs numériques individuelles respectives :

    - stockage dans les noeuds de réseau (N1, .... N6) des valeurs numériques individuelles affectées :

        - détermination, par un noeud de réseau (N1, ..., N6), de la positivité de la valeur numérique stockée, et à partir de ladite détermination, exécution des étapes de
        - détermination d'un débit de données à partir de la valeur numérique, d'envoi ou de réception de données au débit déterminé par le noeud de réseau (N1, ..., N6) ;
        - de diminution, par le noeud de réseau (N1, ..., N6), de la valeur numérique stockée, et stockage de ladite valeur numérique réduite ; et
        - de répétition des étapes permettant de déterminer si la valeur numérique est positive, détermination d'un débit de données partir de la valeur numérique stockée, envoi ou réception de données au débit déterminé et diminution en proportion de la valeur numérique stockée jusqu'à ce que la valeur numérique stockée ne soit pas positive ou que l'envoi ou la réception de données soit terminé.

**2.** Procédé selon la revendication 1, dans lequel l'étape de transmission de valeurs numériques aux noeuds de réseau implique :

    le renvoi d'un second message, par la fonction de service, au noeud depuis lequel le message a été reçu, le second message contenant une déclaration d'accord ou de désaccord, où le noeud de réseau est susceptible de seulement transmettre ou recevoir des données à partir de la déclaration d'accord émise par la fonction de service.

**3.** Procédé selon la revendication 1 ou 2, comprenant en outre les étapes suivantes ;

    - contrôle, par la fonction de service, (QoS_Svc) du débit de données que les noeuds du groupe utilisent pendant un temps de contrôle spécifié ;
    - accumulation desdits débits de données contrôlés ;
    - détermination d'une valeur représentant un budget de groupe à partir des débits de données accumulés, et détermination à partir du budget de groupe, de valeurs numériques individuelles pour les noeuds de réseau.

**4.** Procédé selon la revendication 1 ou 2, comprenant en outre les étapes suivantes :

    - mesure des durées de rotation (round-trip-time) pour les connexions réseau entre lesdits noeuds, où une durée de rotation représente le temps entre l'envoi d'un paquet depuis un premier noeud à un second noeud et la réception d'une réponse provenant du second noeud par le premier noeud, ou la détection de non-réception de réponse n'a été reçue après une durée spécifiée ; et
    - détermination d'une valeur représentant un budget de groupe à partir des durées de rotation mesurées, et détermination de valeurs numériques individuelles pour les noeuds de réseau à partir dudit budget de groupe.

**5.** Procédé selon la revendication 3 ou 4, où une partie du budget n'est pas affectée aux noeuds mais réservée aux nouveaux noeuds rejoignant le groupe.

**6.** Procédé selon l'une quelconque des revendications 1 à 5, où ladite fonction de service (QoS_Svc) détermine un budget pour le groupe et/ou réaffecte des valeurs numériques individuelles aux noeuds à des intervalles de temps réguliers et définis.

**7.** Procédé selon l'une quelconque des revendications 1 à 6, où les noeuds de réseau (N1, ..., N6) ajoutent la valeur numérique individuelle qui leur a été respectivement affectée à la valeur numérique individuelle restant de l'affectation précédente, et stockent la somme.

**8.** Procédé selon l'une quelconque des revendications 1 à 7, où la fonction de service (QoS) accumule les débits de données des noeuds et détermine un budget pour le groupe et/ou affecte les valeurs numériques individuelles aux noeuds lorsque les débits de données accumulés dépassent un certain seuil.

9. Procédé selon l'une quelconque des revendications 1 à 8, où les noeuds de réseau sont pairs dans un réseau peer-to-peer.

10. Un noeud de réseau (NW_N) capable de coopérer avec d'autres noeuds de réseau en tant que groupe de noeuds, dans lequel au moins une fonction de service (QoS) est disponible pour lesdits noeuds au sein du groupe, comprenant :

- un moyen d'interface (NW IF) pour l'envoi d'un message de requête de débit de données de transmission ou de réception à la fonction de service, et pour la réception d'une valeur numérique individuelle provenant de la fonction de service (QoS) ;
- moyen (MEM) permettant de stocker la valeur numérique individuelle reçue :
- moyen ($\mu$P) permettant de déterminer que la valeur numérique stockée est positive ;
- moyen ($\mu$P) permettant de déterminer un débit de données à partir de la valeur numérique si la valeur numérique est positive, où la valeur numérique est une mesure de la bande passante pouvant être attribuée par le noeud pendant une durée spécifiée, ou une mesure de la quantité de données que le noeud peut envoyer ou recevoir pendant une durée spécifiée ;
- moyen (DRC) permettant de modifier le débit de données dudit moyen d'interface (NW IF) pour respecter le débit déterminé,
- moyen ($\mu$P) permettant de réduire la valeur numérique stockée ;
- moyen (MEM) permettant de stocker ladite valeur numérique réduite ; et
- moyen permettant de réenclencher des moyens de détermination d'un débit à partir de la valeur numérique réduite stockée si ladite valeur numérique réduite stockée est positive jusqu'à ce que la valeur numérique stockée ne soit plus positive, ou jusqu'à ce que l'envoi ou la réception des données soit terminé.

11. Un noeud de réseau, selon la revendication 10, comprenant en outre un moyen permettant d'ajouter la valeur numérique reçue à la valeur numérique stockée et réduite.

Fig.1

Fig.2

12

QoS

NW_N

μP   MEM

DRC

NW_IF   CB   DPROC

DB

NW_B

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 02027122 A
- WO 02057917 A
- EP 1427141 A